(19) Europäisches Patentamt
European Patent Office
Office européen des brevets

(11) **EP 4 787 333 A1**

(12) **EUROPÄISCHE PATENTANMELDUNG**

(43) Veröffentlichungstag:
**05.08.2026 Patentblatt 2026/32**

(21) Anmeldenummer: **25155252.7**

(22) Anmeldetag: **31.01.2025**

(51) Internationale Patentklassifikation (IPC):
**G06V 10/46** (2022.01)   **G06V 10/75** (2022.01)
**G06V 10/74** (2022.01)   **G06V 10/762** (2022.01)

(52) Gemeinsame Patentklassifikation (CPC):
**G06V 10/761; G06V 10/46; G06V 10/757;**
**G06V 10/7635;** G06V 2201/06

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Liu, Yushi**
  **71254 Ditzingen (DE)**
• **Keuper, Margret**
  **57076 Siegen (DE)**
• **Spies, Markus**
  **76137 Karlsruhe (DE)**
• **Graf, Christian**
  **69221 Dossenheim (DE)**

(54) **VERFAHREN ZUM DETEKTIEREN VON OBJEKTEN GLEICHEN OBJEKTTYPS IN EINEM BILD**

(57) Verschiedene Aspekte betreffen ein Verfahren zum Detektieren von Objekten gleichen Objekttyps in einem Bild, das Verfahren aufweisend: Detektieren von Objekten in dem Bild; Ermitteln einer Vielzahl von Objektpaaren, welche für jedes Objekt der Objekte ein jeweiliges Objektpaar mit jedem anderen Objekt aufweist; Ermitteln einer Vielzahl von Ähnlichkeitswerten, indem für jedes Objektpaar ein jeweiliger Ähnlichkeitswert, welcher eine Ähnlichkeit zwischen einem ersten Objekt und einem zweiten Objekt des Objektpaares repräsentiert, ermittelt wird, das Ermitteln des jeweiligen Ähnlichkeitswertes aufweisend: Ermitteln von ersten Merkmalsvektoren, indem für mehrere dem ersten Objekt zugehörige Bildpunkte des Bildes ein erster Merkmalsvektor ermittelt wird, Ermitteln von zweiten Merkmalsvektoren, indem für mehrere dem zweiten Objekt zugehörige Bildpunkte des Bildes ein zweiter Merkmalsvektor ermittelt wird, Ermitteln des jeweiligen Ähnlichkeitswertes unter Verwendung der ersten Merkmalsvektoren und der zweiten Merkmalsvektoren; und unter Verwendung der Vielzahl von Ähnlichkeitswerten, Gruppieren der Objekten in mehrere Gruppen, von denen mindestens eine Gruppe mehrere Objekte gleichen Objekttyps aufweist.

Fig. 4

EP 4 787 333 A1

**Beschreibung**

Stand der Technik

Das Aufnehmen (d.h. Greifen) eines Objekts (z.B. aus einem Behälter und/oder von einem Tisch) ist ein wichtiges Problem in der Robotik, welches auch als Griff-in-die-Kiste-Problem (engl.: bin picking) bezeichnet wird. Hierbei ist es erforderlich, dass ein Roboter die in dem Behälter liegenden Objekte detektieren kann, beispielsweise um zu entscheiden, welches Objekt entnommen werden soll. Hierfür ist es erforderlich, dass der Roboter zu entnehmende Objekte von anderen, unerwünschten Objekten, wie beispielsweise Verpackungsmaterial, unterscheiden kann

Offenbarung der Erfindung

Die vorliegende Offenbarung bezieht sich auf ein Verfahren, welches ein effizientes Detektieren (z.B. Erkennen) von Objekten gleichen Objekttyps in einem Bild ermöglicht. Beispielsweise können so Objekte gleichen Objekttyps von anderen Objekten, wie beispielsweise Fremdkörpern (z.B. Verpackungsmaterial), unterschieden werden. So kann zum Beispiel beim Entnehmen von Objekten aus einem Behälter (also einem Griff-in-die-Kiste Problem) zwischen den Objekten gleichen Objekttyps und Verpackungsmaterial unterschieden werden. Dies ist ferner möglich, ohne dass die Objekte klassifiziert werden, also dass deren Objekttyp ermittelt (z.B. vorhergesagt) wird.

Verschiedene Aspekte betreffen ein Verfahren zum Detektieren von Objekten gleichen Objekttyps in einem Bild, das Verfahren aufweisend: Detektieren einer Vielzahl von Objekten in dem Bild (von denen jedem Objekt ein jeweiliger Bildbereich in dem Bild zugeordnet ist); Ermitteln einer Vielzahl von Objektpaaren, welche für jedes Objekt der Vielzahl von Objekten (genau) ein jeweiliges Objektpaar mit jedem anderen Objekt der Vielzahl von Objekten aufweist; Ermitteln einer Vielzahl von Ähnlichkeitswerten, indem für jedes Objektpaar der Vielzahl von Objektpaaren ein jeweiliger Ähnlichkeitswert, welcher eine Ähnlichkeit zwischen einem ersten Objekt des Objektpaares und einem zweiten Objekt des Objektpaares gemäß einer (vordefinierten) Ähnlichkeitsmetrik repräsentiert, ermittelt wird, wobei das Ermitteln des jeweiligen Ähnlichkeitswertes aufweist: Ermitteln einer Vielzahl von ersten Merkmalsvektoren, indem für mehrere dem ersten Objekt zugehörige Bildpunkte des Bildes (z.B. des jeweiligen Bildbereichs) ein jeweiliger erster Merkmalsvektor ermittelt wird, Ermitteln einer Vielzahl von zweiten Merkmalsvektoren, indem für mehrere dem zweiten Objekt zugehörige Bildpunkte des Bildes (z.B. des jeweiligen Bildbereichs) ein jeweiliger zweiter Merkmalsvektor ermittelt wird, und Ermitteln des jeweiligen Ähnlichkeitswertes unter Verwendung der Vielzahl von ersten Merkmalsvektoren und der Vielzahl von zweiten Merkmalsvektoren; und unter Verwendung der Vielzahl von Ähnlichkeitswerten, Gruppieren (z.B. Clustern) der Vielzahl von Objekten in mehrere Gruppen, von denen mindestens eine Gruppe mehrere Objekte gleichen Objekttyps aufweist.

Im Folgenden werden verschiedene Ausführungsbeispiele angegeben.

Beispiel 1 ist das Verfahren zum Detektieren von Objekten gleichen Objekttyps in einem Bild wie voranstehend beschrieben.

Beispiel 2 ist eingerichtet gemäß Beispiel 1, wobei das Detektieren der Vielzahl von Objekten in dem Bild aufweist: Eingeben des Bildes und einer Textbeschreibung in ein maschinelles Lernmodell, beispielsweise eines Segmentierungsmodells (z.B. eines Segmentiere-Alles-Modells (SAM, engl.: Segment Anything Model) (z.B. Grounded SAM)), welches eingerichtet ist, in Reaktion auf die Eingabe des Bildes und der Textbeschreibung alle in dem Bild gemäß der Textbeschreibung erkannten Objekte als die Vielzahl von Objekten auszugeben, wobei ein voneinander verschiedene Objekttypen umfassender (z.B. vordefinierter) Oberbegriff (z.B. "Gegenstand", "Objekt", "Produkt", "Artikel", etc.) als Textbeschreibung eingebeben wird.

Es wurde erkannt, dass die Verwendung eines Text-Prompt-basierten maschinellen Lernmodells die Anzahl an falsch-positiv detektieren Objekten (z.B. von Bildausschnitten des Hintergrunds) signifikant verringert und damit die Genauigkeit der detektierten mehreren Objekte gleichen Objekttyps erhöht.

Beispiel 3 ist eingerichtet gemäß Beispiel 1 oder 2, wobei das Ermitteln der Vielzahl von ersten Merkmalsvektoren aufweist: Ermitteln einer Vielzahl von ersten Fixpunkten des ersten Objekts, von denen jeder erste Fixpunkt einem jeweiligen Bildpunkt der mehreren dem ersten Objekt zugehörigen Bildpunkte zugeordnet ist, so dass für jeden ersten Fixpunkt der jeweilige erste Merkmalsvektor ermittelt wird; wobei das Ermitteln der Vielzahl von zweiten Merkmalsvektoren aufweist: Ermitteln einer Vielzahl von zweiten Fixpunkten des zweiten Objekts, von denen jeder zweite Fixpunkt einem jeweiligen Bildpunkt der mehreren dem zweiten Objekt zugehörigen Bildpunkte zugeordnet ist, so dass für jeden zweiten Fixpunkt der jeweilige zweite Merkmalsvektor ermittelt wird; wobei das Ermitteln des jeweiligen Ähnlichkeitswertes unter Verwendung der Vielzahl von ersten Merkmalsvektoren und der Vielzahl von zweiten Merkmalsvektoren aufweist: Ermitteln ein oder mehrerer Fixpunktpaare, indem ein jeweiliges Fixpunktpaar mit einem ersten Fixpunkt der Vielzahl von ersten Fixpunkten und einem zugehörigen zweiten Fixpunkt der Vielzahl von zweiten Fixpunkten ermittelt wird, wenn ein Fixpunktpaar-Ähnlichkeitswert, welcher eine Ähnlichkeit zwischen dem für den ersten Fixpunkt ermittelten jeweiligen ersten Merkmalsvektor und dem für den zweiten Fixpunkt ermittelten jeweiligen zweiten Merkmalsvektor (gemäß einer anderen Ähnlichkeitsmetrik) repräsentiert, größer als oder gleich einem Fixpunktpaar-Ähnlichkeitsschwellenwert ist; und Ermitteln des jeweiligen Ähnlichkeitswertes für das Objektpaar unter Verwendung einer Anzahl (an Fixpunktpaaren) der ein oder mehreren Fixpunktpaare.

Beispiel 4 ist eingerichtet gemäß Beispiel 1 oder 2, wobei das Ermitteln des jeweiligen Ähnlichkeitswertes der Vielzahl von Ähnlichkeitswerten für ein Objektpaar der Vielzahl von Objektpaaren, welches ein erstes Objekt und ein zweites Objekt aufweist, aufweist: Ermitteln einer Vielzahl von ersten Merkmalsvektoren, indem jeweils für ein oder mehrere dem ersten Objekt zugehörige Bildpunkte des Bildes (z.B. für jeden Bildpunkt oder für jede Gruppe von mehreren Bildpunkten) ein jeweiliger erster Merkmalsvektor ermittelt wird; Ermitteln eines ersten mittleren Merkmalsvektors als Mittelwert der Vielzahl von ersten Merkmalsvektoren; Ermitteln einer Vielzahl von zweiten Merkmalsvektoren, indem für jeden dem zweiten Objekt zugehörigen Bildpunkt des Bildes ein jeweiliger zweiter Merkmalsvektor ermittelt wird; Ermitteln eines zweiten mittleren Merkmalsvektors als Mittelwert der Vielzahl von zweiten Merkmalsvektoren; und Ermitteln des jeweiligen Ähnlichkeitswertes für das Objektpaar derart, dass dieser eine Ähnlichkeit zwischen dem ersten mittleren Merkmalsvektor und dem zweiten mittleren Merkmalsvektor repräsentiert.

Es wurde erkannt, dass für den Fixpunkt-Ansatz gemäß Beispiel 3 ein signifikantes Überlappen der sichtbaren Bereiche der mehreren Objekte erforderlich ist und dass das Verwenden des mittleren Merkmalsvektors gemäß Beispiel 4 eine Zuordnung von Objekten gleichen Objekttyps auch dann ermöglicht, wenn der Überlapp der sichtbaren Bereiche deutlich geringer ist. In manchen Aspekten kann die Vielzahl von Ähnlichkeitswerten auch aus einer Kombination des Fixpunkt-Ansatzes gemäß Beispiel 3 und des Ansatzes des mittleren Merkmalsvektors gemäß Beispiel 4 ermittelt werden.

Beispiel 5 ist eingerichtet gemäß einem der Beispiele 1 bis 4, wobei das Gruppieren der Vielzahl von Objekten aufweist: Clustern der Vielzahl von Objekten in die mehreren Gruppen unter Verwendung einer Graph-basierten Clustermethode (z.B. eines Minimale-Kosten-Mehrschnitt-Ansatzes).

Die Kombination aus der Verwendung eines Text-Prompt-basierten maschinellen Lernmodells (siehe Beispiel 2) zur Objekterkennung mit einer Graph-basierten Clustermethode, wie beispielsweise dem Minimale-Kosten-Mehrschnitt-Ansatz (engl.: Minimum-Cost-Multicut-Problem), ermöglicht die Detektion von Objekten gleichen Objekttyps (also sich wiederholender Objekte) ohne, dass zuvor eine Instanz der Objekte Gewichtungen des maschinellen Lernmodells beeinflusst (also ohne eine Adaption des maschinellen Lernmodells. Anschaulich wird dadurch eine Zero-Shot-Detektion von Objekten gleichen Objekttyps bereitgestellt. Dies führt ferner zu einer erhöhten Leistungsfähigkeit beim Detektieren von Objekten gleichen Objekttyps.

In Beispiel 6 kann das Verfahren gemäß einem der Beispiele 1 bis 5 optional ferner aufweisen: Ermitteln einer jeweiligen Objektart für jede der mindestens einen Gruppe.

Beispielsweise kann das Ermitteln der jeweiligen Objektart einer Gruppe aufweisen, dass für jedes Objekt der mehreren Objekte der Gruppe eine zugehörige potentielle Objektart vorhergesagt (das Objekt beispielsweise klassifiziert) wird und dass die jeweilige Objektart der Gruppe dann als Mehrheitsentscheidung aus den vorhergesagten potentiellen Objektarten ermittelt wird. Auf diese Weise kann die Genauigkeit der Objekterkennung signifikant erhöht werden, indem die Wahrscheinlichkeit verringert wird, dass für Objekte gleichen Objekttyps verschiedene potentielle Objekttypen ermittelt wird. Zusätzlich oder alternativ kann für jede Klasse von mehreren Klassen ein jeweiliger mittlerer Merkmalsvektor (z.B. als Clusterzentrum) gespeichert werden oder sein und die Klassifizierung kann dann anhand dieser klassenspezifischen mittleren Merkmalsvektoren erfolgen. Anschaulich kann die Genauigkeit der Klassifikation signifikant erhöht werden.

Beispiel 7 ist ein Verfahren zum Steuern einer Robotervorrichtung, das Verfahren aufweisend: Erfassen eines Bildes, welches eine Vielzahl von Objekten in einer Umgebung der Robotervorrichtung (z.B. in einem Behälter) zeigt, von denen mehrere Objekte einen gleichen Objekttyp aufweisen; Detektieren der mehreren Objekte gleichen Objekttyps mittels eines Verfahrens gemäß einem der Beispiele 1 bis 6; und Steuern der Robotervorrichtung zum Aufnehmen (z.B. Greifen) (zumindest) eines Objekts der mehreren Objekte.

Beispiel 8 ist eingerichtet gemäß Beispiel 7, wobei das Steuern der Robotervorrichtung zum Aufnehmen des Objekts der mehreren Objekte aufweist: Ermitteln mittels eines Robotersteuerungsmodells, unter Verwendung der Information, dass die mehreren Objekte den gleichen Objekttyp aufweisen, einer Aufnehmkonfiguration der Robotervorrichtung zum Aufnehmen des Objekts und/oder einer Trajektorie zum Bewegen des (aufgenommenen) Objekts.

Beispiel 9 ist eingerichtet gemäß Beispiel 7 oder 8, wobei die mehreren Objekte mehrere erste Objekt eines (gleichen) ersten Objekttyps sind und wobei die Vielzahl von Objekten ferner mehrere zweite Objekte eines von dem ersten Objekttyp verschiedenen (gleichen) zweiten Objekttyps aufweist, so dass die mittels des Verfahren ermittelten mehreren Gruppen eine erste Gruppe, welche die mehreren ersten Objekte aufweist, und eine zweite Gruppe, welche die mehreren zweiten Objekte aufweist, aufweisen; und wobei das Verfahren ferner aufweist: Steuern der Robotervorrichtung zum Sortieren der mehreren ersten Objekte (z.B. in einen ersten Behälter) und der mehreren zweiten Objekte (z.B. in einen zweiten Behälter).

Beispiel 10 ist eingerichtet gemäß einem der Beispiele 7 bis 9, wobei die Vielzahl von Objekten für jeden Objekttyp von mehreren (voneinander verschiedenen) Objekttypen jeweils mehreren Objekte aufweist, so dass die mittels des Verfahren ermittelten mehreren Gruppen für jeden Objekttyp der mehreren Objekttypen eine jeweilige Gruppe aufweisen, welche die jeweiligen mehreren Objekte gleichen Objekttyps aufweist; wobei das Steuern der Robotervorrichtung zum Aufnehmen des Objekts der mehreren Objekte aufweist: Steuern der Robotervorrichtung zum Aufnehmen eines Objekts (der jeweiligen mehreren Objekte) aus einer Gruppe der mehreren Gruppen, welche die meisten Objekte gleichen Objekttyps aufweist.

Beispiel 11 ist eine Steuervorrichtung, die eingerichtet ist, das Verfahren gemäß einem der Beispiele 7 bis 10 auszuführen.

Beispiel 12 ist eine Robotervorrichtung, welche die Steuervorrichtung gemäß Beispiel 11 aufweist.

Beispiel 13 ist eine Datenverarbeitungseinheit, die eingerichtet ist, ein Verfahren gemäß einem der Beispiele 1 bis 10 auszuführen.

Beispiel 14 ist ein Computerprogramm mit Befehlen, die, wenn sie durch einen Prozessor ausgeführt werden, bewirken, dass der Prozessor das Verfahren gemäß einem der Beispiele 1 bis 10 durchführt.

Beispiel 15 ist ein computerlesbares Medium, das Befehle speichert, die, wenn sie durch einen Prozessor ausgeführt werden, bewirken, dass der Prozessor das Verfahren gemäß einem der Beispiele 1 bis 10 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt eine Robotervorrichtungsanordnung gemäß verschiedenen Aspekten;
Figur 2 zeigt einen beispielhaften Behälter mit mehreren Objekten gleichen Objekttyps;
Figur 3 zeigt ein Ablaufdiagramm eines Verfahrens zum Detektieren von Objekten gleichen Objekttyps in einem Bild gemäß verschiedenen Aspekten; und
Figur 4 zeigt verschiedene Aspekte des Verfahrens gemäß verschiedenen Aspekten.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

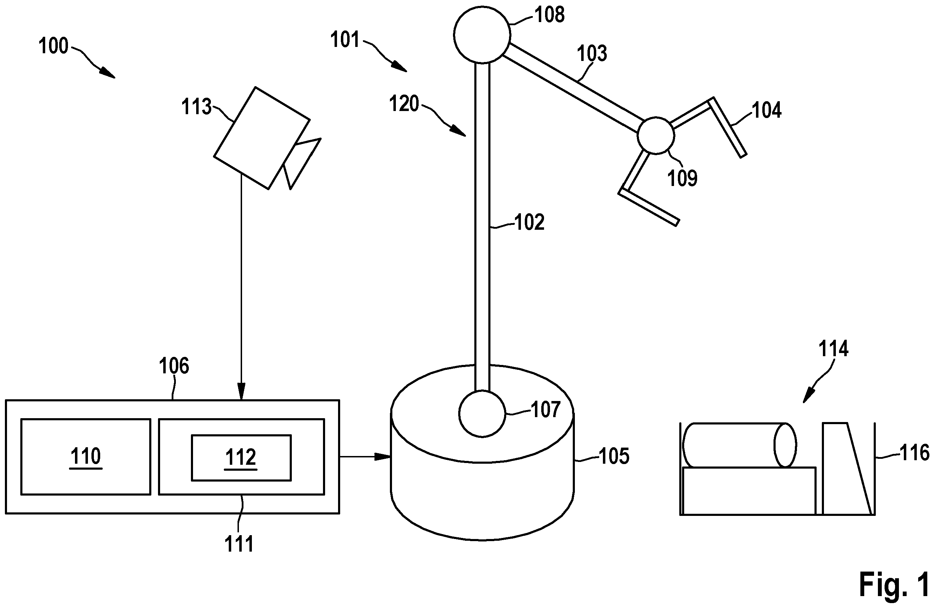

**FIG.1** zeigt eine Robotervorrichtungsanordnung 100 gemäß verschiedenen Aspekten. The Robotervorrichtungsanordnung 100 kann eine Robotervorrichtung 101 (kurz: Roboter) aufweisen. Die in FIG. 1 gezeigte und im Folgenden beispielhaft beschriebene Robotervorrichtung 101 stellt zur Veranschaulichung eine beispielhafte Robotervorrichtung als Rotoberarm 120 zum Aufnehmen von Objekten 114 aus einem Behälter 116 dar. Es wird darauf hingewiesen, dass die Robotervorrichtung der Veranschaulichung dient und allgemein jede Art von computergesteuerter Vorrichtung sein kann, wie beispielsweise ein Roboter (z.B. ein Fertigungsroboter (z.B. zum Bewegen, Montieren oder Bearbeiten eines Werkstücks), ein Wartungsroboter, ein Haushaltsroboter, ein Medizinroboter, etc.), ein Fahrzeug (z.B. ein zumindest teilweise automatisiertes Fahrzeug), ein Haushaltsgerät, eine Produktionsmaschine, ein persönlicher Assistent, ein Zugangs-Steuerungs-System etc., sowie jede andere Art von Robotervorrichtung.

Der Roboterarm 120 kann Roboterglieder 102, 103, 104 und einen Sockel (oder allgemein eine Halterung) 105 aufweisen, durch welche die Roboterglieder 102, 103, 104 getragen werden. Der Begriff "Roboterglieder " kann sich auf die beweglichen Teile der Robotervorrichtung 101 beziehen, deren Betätigung eine physische Interaktion mit der Umgebung ermöglicht, um beispielsweise eine Aufgabe auszuführen, z.B. um ein oder mehrere Fertigkeiten auszuführen bzw. durchzuführen.

Zur Steuerung der Robotervorrichtung 101 kann die Robotervorrichtungsanordnung 100 eine (Roboter) Steuervorrichtung 106 aufweisen, die eingerichtet ist, die Interaktion mit der Umgebung gemäß einem Steuerungsprogramm zu realisieren. Das letzte Element 104 (von dem Sockel 105 aus gesehen) der Roboterglieder 102, 103, 104 wird auch als Endeffektor 104 bezeichnet. Die Art des Endeffektors 104 kann festlegen, ob die Robotervorrichtung 101 imstande ist, greifende und/oder nicht-greifende Objektmanipulationen durchzuführen. Eine greifende Objektmanipulation kann sich auf eine Manipulation eines Objekts beziehen, bei der das Objekt gegriffen wird, wohingegen sich eine nicht-greifende Objektmanipulation auf eine Manipulation eines Objekts beziehen kann, bei der das Objekt nicht gegriffen wird. Folglich kann die Robotervorrichtung 101 zur greifenden Objektmanipulation fähig sein, wenn der Endeffektor 104 mindestens ein Greifwerkzeug (bei dem es sich auch um eine Ansaugvorrichtung (z.B. einen Saugkopf) oder dergleichen handeln kann) aufweist. In jedem Fall kann die Robotervorrichtung 101 zur nicht-greifenden Objektmanipulation fähig sein, beispielsweise indem das Objekt (ohne es zu greifen) geschoben wird, um zum Beispiel dessen laterale Position und/oder Orientierung zu ändern.

Die anderen Roboterglieder 102, 103 (näher am Sockel 105) können eine Positionierungsvorrichtung bilden, so dass zusammen mit dem Endeffektor 104 ein Roboterarm 120 (oder Gelenkarm) mit dem Endeffektor 104 an seinem Ende vorgesehen ist. Der Roboterarm 120 kann ein mechanischer Arm sein, der ähnliche Funktionen wie ein menschlicher Arm erfüllen kann (möglicherweise mit einem Werkzeug an seinem Ende).

Der Roboterarm 120 kann Verbindungselemente 107, 108, 109 aufweisen, welche die Roboterglieder 102, 103, 104 miteinander und mit dem Sockel 105 verbinden. Ein Verbindungselement 107, 108, 109 kann ein oder mehrere Gelenke aufweisen, von denen jedes eine Drehbewegung und/oder eine Translationsbewegung (d.h. eine Verschiebung) für zugehörige Roboterglieder relativ zueinander bereitstellen kann. Die Bewegung der Roboterglieder 102, 103, 104 kann mit Hilfe von Stellgliedern eingeleitet werden, die von der Steuervorrichtung 106 gesteuert werden.

Der Begriff "Stellglied" kann als eine Komponente verstanden werden, die geeignet ist, als Reaktion darauf, dass sie angetrieben wird, einen Mechanismus zu beeinflussen. Das Stellglied kann von der Steuervorrichtung 106 ausgegebene Anweisungen (die sogenannte Aktivierung) in mechanische Bewegungen umsetzen. Das Stellglied, z.B. ein elektromechanischer Wandler, kann eingerichtet werden, elektrische Energie als Reaktion auf seine Ansteuerung in mechanische Energie umzuwandeln.

Der Begriff "Steuervorrichtung" (auch als "Steuereinrichtung" bezeichnet) kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 106 einen Computer 110 und einen Speicher 111, der Code und Daten speichert, auf deren Grundlage der Computer 110 die Robotervorrichtung 101 steuert, aufweisen. Gemäß verschiedener Ausführungsformen kann die Steuervorrichtung 106 die Robotervorrichtung 101 auf der Grundlage eines im Speicher 111 gespeicherten Roboter-Steuerungsmodells 112 steuern.

Als ein Beispiel kann die (greifende) Aufgabe der Robotervorrichtung 101 eine Objektentnahme sein, also ein Aufnehmen (z.B. Greifen oder Ansaugen) eines Objekts der (Vielzahl von) Objekte 114 und ein Bewegen des aufgenommenen Objekts (z.B. zu einem Scanner, in einen anderen Behälter, etc.). Um das aufzunehmende Objekt und eine geeignete Greifposition auf dem Objekt bestimmen zu können, kann die Steuervorrichtung 106 Bilder des Arbeitsbereichs der Robotervorrichtung 101, in dem sich die Objekte 114 befinden, verwenden.

Als ein anderes Beispiel kann die (nicht-greifende) Aufgabe der Robotervorrichtung 101 sein, das Objekt 114 an eine andere Position zu schieben und/oder derart zu schieben, dass sich dessen Orientierung ändert. In diesem Fall können die Bilder des Arbeitsbereichs der Robotervorrichtung 101, in dem sich die Objekte 114 befinden, dazu dienen, eine geeigneten Kontaktposition (an welcher die Robotervorrichtung 101 das Objekt berühren (aber nicht greifen) soll) zu ermitteln.

Diese Bilder der Umgebung der Robotervorrichtung 101 können von einem oder mehreren Bildgebungssensoren 113 geliefert werden (z. B. am Roboterarm 120 angebracht oder auf andere Weise, so dass die Steuervorrichtung 106 den Blickwinkel der ein oder mehreren Bildgebungssensoren 113 steuern kann).

Ein Bildgebungssensor, wie hierin verwendet, kann zum Beispiel eine Kamera (z.B. eine Standardkamera, eine Digitalkamera, eine Infrarotkamera, eine Stereokamera, etc.), ein Radar-Sensor, ein LIDAR-Sensor, ein Ultraschallsensor, etc. sein. Daher kann ein Bild ein RGB-Bild, ein RGB-D-Bild oder ein Tiefenbild (auch als D-Bild bezeichnet) sein. Ein hierin beschriebenes Tiefenbild kann jede Art von Bild sein, das Tiefeninformationen aufweist. Anschaulich kann ein Tiefenbild 3-dimensionale Informationen zu ein oder mehreren Objekten aufweisen. Ein hierin beschriebenes Tiefenbild kann zum Beispiel eine Punktwolke aufweisen, die von einem LIDAR-Sensor und/oder einem Radar-Sensor bereitgestellt wird. Ein Tiefenbild kann zum Beispiel ein von einem LIDAR-Sensor bereitgestelltes Bild mit Tiefeninformationen sein.

Die Steuervorrichtung 106 kann eingerichtet sein, den Roboterarm 120 in Reaktion auf eine Eingabe eines Bildes in das Roboter-Steuerungsmodells 112 basierend auf einer Ausgabe des Roboter-Steuerungsmodells 112 zu steuern.

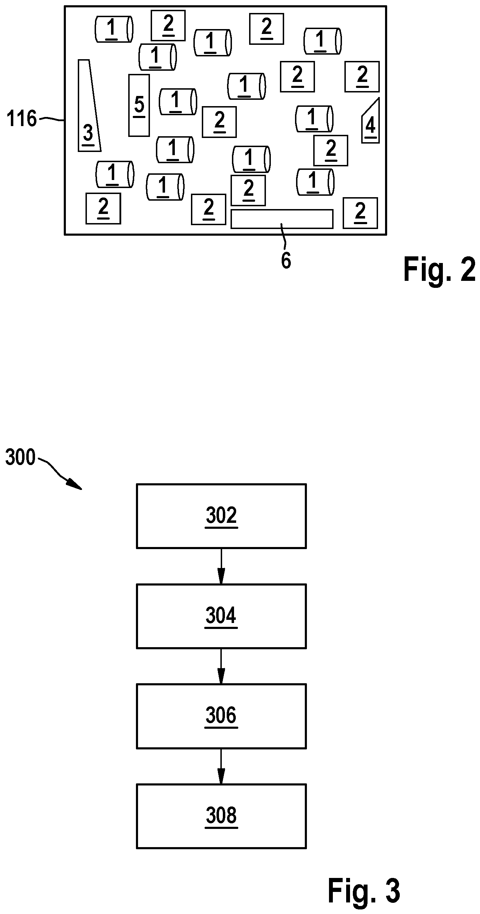

Wie in **FIG.2** gezeigt, kann es vorkommen, dass in dem Behälter 116 (welcher auch als Box, Container, Aufbewahrungsbox, etc. bezeichnet werden kann) mehrere Objekte eines gleichen Objekttyps sind. So zeigt FIG.2 zur Veranschaulichung mehrere erste Objekte 1 eines ersten Objekttyps und mehrere zweite Objekte 2 eines (von dem ersten Objekttyp verschiedenen) zweiten Objekttyps. Der Behälter 116 kann aber auch andere Objekte aufweisen, die seltener vorkommen (also deren Anzahl geringer ist), wie beispielsweise die Objekte 3, 4, 5, und 6. Es wird verstanden, dass sich die Objekte auch überlagern können und/oder in verschiedenen Orientierungen ausgerichtet sein können.

Für verschiedene Anwendungen kann es vorteilhaft oder sogar erforderlich sein, zu ermitteln, welche Objekte den gleichen Objekttyp aufweisen. In einem Beispiel kann der Behälter 116 jeweils mehreren Objekte für jeden Objekttyp von mehreren Objekttypen aufweisen und die Aufgabe der Robotervorrichtung 101 kann ein Sortieren der Objekte gemäß deren Objekttyp sein (z.B. die mehreren Objekte eines jeweiligen Objekttyps in einen entsprechenden anderen Behälter zu bewegen). Beispielsweise können die in FIG.2 gezeigten mehreren ersten Objekte 1 in einen ersten Behälter und die mehreren zweiten Objekte 2 in einen (von dem ersten Behälter verschiedenen) zweiten Behälter sortiert werden. In einem anderen Beispiel können die Objekte 114 in dem Behälter 116 im Wesentlichen sortenrein sein. In beiden Fällen kann der Behälter aber auch andere, unerwünschte Objekte, wie beispielsweise Verpackungsmaterial, aufweisen, welche nicht entnommen werden sollen oder welche in einen ganz anderen Behälter bewegt werden sollen. Solche anderen Objekte können aber auch Anomalien oder Ausreißer sein, wie zum Beispiel ein defektes Objekt. Daher kann es in beiden Fällen erforderlich sein, diese unerwünschten Objekte von den mehreren Objekten des jeweiligen Objekttyps zu unterscheiden. Auch kann das Wissen darüber, welche Objekte den gleichen Objekttyp aufweisen, die Wahrscheinlichkeit eines erfolgreichen Aufnehmens und Bewegens der Objekte erhöhen, da dadurch die Wahrscheinlichkeit erhöht wird, erfolgreiche Aufnehmkonfigurationen der Robotervorrichtung 101 zum Aufnehmen eines Objekts und/oder erfolgreiche Trajektorien zum Bewegen des Objekts zu ermitteln (beispielsweise können für den Objekttyp in der Vergangenheit erfolgreiche Konfigurationen und Trajektorien ausgenutzt werden).

**FIG.3** zeigt ein Ablaufdiagramm eines (computerimplementierten) Verfahrens 300 zum gemäß verschiedenen Aspekten.

Das Verfahren 300 kann (in 302) ein Detektieren einer Vielzahl von Objekten in dem Bild aufweisen.

Das Verfahren 300 kann (in 304) ein Ermitteln einer Vielzahl von Objektpaaren, welche für jedes Objekt der Vielzahl von Objekten (genau) ein jeweiliges Objektpaar mit jedem anderen Objekt der Vielzahl von Objekten aufweist, aufweisen.

Das Verfahren 300 kann (in 306) ein Ermitteln einer Vielzahl von Ähnlichkeitswerten aufweisen, indem für jedes Objektpaar der Vielzahl von Objektpaaren ein jeweiliger Ähnlichkeitswert, welcher eine Ähnlichkeit zwischen einem ersten Objekt des Objektpaares und einem zweiten Objekt des Objektpaares gemäß einer (vordefinierten) Ähnlichkeitsmetrik repräsentiert, ermittelt wird. Hierbei kann das Ermitteln des jeweiligen Ähnlichkeitswertes aufweisen: Ermitteln einer Vielzahl von ersten Merkmalsvektoren, indem für mehrere dem ersten Objekt zugehörige Bildpunkte des Bildes (z.B. des jeweiligen Bildbereichs) ein jeweiliger erster Merkmalsvektor ermittelt wird; Ermitteln einer Vielzahl von zweiten Merkmalsvektoren, indem für mehrere dem zweiten Objekt zugehörige Bildpunkte des Bildes (z.B. des jeweiligen Bildbereichs) ein jeweiliger zweiter Merkmalsvektor ermittelt wird; und Ermitteln des jeweiligen Ähnlichkeitswertes unter Verwendung der Vielzahl von ersten Merkmalsvektoren und der Vielzahl von zweiten Merkmalsvektoren.

Das Verfahren 300 kann (in 308), unter Verwendung der Vielzahl von Ähnlichkeitswerten, ein Gruppieren (z.B. Clustern) der Vielzahl von Objekten in mehrere Gruppen, von denen mindestens eine Gruppe mehrere Objekte gleichen Objekttyps aufweist, aufweisen.

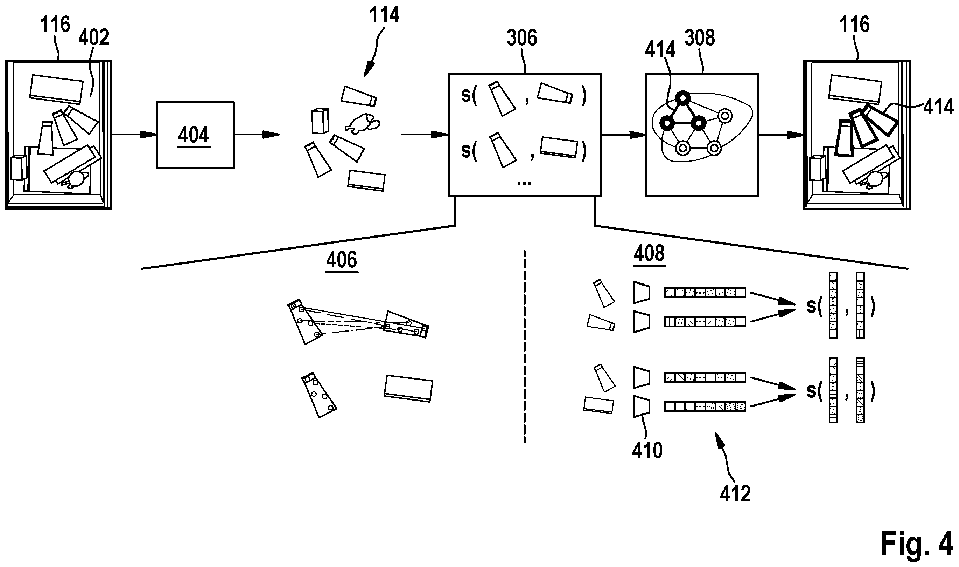

Im Folgenden werden verschiedene Aspekte des Verfahrens 300 mit Bezug auf **FIG.4** detaillierter beschrieben.

Gemäß verschiedenen Aspekten kann für das Detektieren (in 302) der Vielzahl von Objekten 114 in dem (in diesem Beispiel RGB-) Bild 402 (welches beispielsweise den Behälter 116 zeigt) ein maschinelles Lernmodell 404 herangezogen werden. Dieses maschinelle Lernmodell 404 kann ein (z.B. Open-World- (z.B. Segmentierungs-)) Basismodell (engl.: foundation model) sein, um Objekte in Eingabedaten (z.B. in einem Bild) zu finden. Da es sich bei den detektierten Objekten 114 um Vorhersagen möglicher Objekte handelt, können diese auch als Objektvorschläge bezeichnet werden.

**Beispielsweise** kann das maschinelle Lernmodell 404 ein Text-Prompt-basiertes maschinelles Lernmodell sein, welches eingerichtet ist, in Reaktion auf die Eingabe des Bildes 402 und einer Textbeschreibung alle in dem Bild 402 gemäß der Textbeschreibung erkannten Objekte als die Vielzahl von Objekten 114 auszugeben. Zum Beispiel kann das maschinelle Lernmodell 404 eine Kombination aus einem Grounding-Selbstdestillationohne-Label (Grounding-DINO, engl.: grounding self-distillation with no labels) und einem Segmentiere-Alles-Modell (SAM, engl.: Segment Anything Model) sein (was dann auch als Grounded SAM bezeichnet wird) sein.

Es wird verstanden, dass hierbei für jedes detektierte Objekt der Vielzahl von Objekten 114 eine jeweilige (Segmentierungs-) Maske mit einem entsprechenden Bildbereich (z.B. Bildausschnitt) in dem Bild 402 ermittelt wird (und nicht nur ein Begrenzungsrahmen (engl.: bounding box). Anschaulich kann jedem Objekt der Vielzahl von Objekten 114 ein jeweiliger Bildbereich mit jeweiligen Bildpunkten zugehörig sein.

Es wurde erkannt, dass, wenn als Textbeschreibung ein allgemeiner Oberbegriff, der voneinander verschiedene Objekttypen umfasst, verwendet wird, die Anzahl an falsch-positiv detektieren Objekten signifikant verringert werden kann. Beispielsweise kann hierfür ein vollständig Objekttyp-unabhängiger Oberbegriff, wie "Gegenstand", "Objekt", "Produkt", "Artikel", etc., verwendet werden (oder auch Oberbegriffe wie "greifbare Gegenstande", etc.). In manchen Anwendungen, in denen nur Objekttypen einer bestimmten Objektkategorie erwartet werden, kann auch eine Objektkategorie (wie beispielsweise "Schrauben", "Obst", etc.) als Oberbegriff verwendet werden. Daher wird verstanden, dass unter dem Ausdruck "Objekte gleichen Objekttyps", wie hierin verwendet, gleiche Objekte gemeint sind und nicht nur Objekte gleicher Objektkategorie. So sind Bananen und Birnen beispielsweise Objekte der gleichen Objektkategorie Obst, aber haben nicht den gleichen Objekttyp (Bananen ≠ Birnen). Im Falle von Schrauben als Objektkategorie beziehen sich die Objekttypen auf ganz bestimmte Schrauben einer expliziten Schraubenart mit expliziten Maße.

In 304 können dann die $\binom{N}{2}$ Objektpaare gebildet werden, wobei N die Anzahl an (in 302) detektierten Objekte der Vielzahl von Objekten 114 ist. Folglich weist jedes Objektpaar ein erstes Objekt, $\hat{o}_i$, und ein zweites Objekt, $\hat{o}_j$, auf.

In 306 kann dann für jedes Objektpaar der $\binom{N}{2}$ Objektpaare der jeweilige Ähnlichkeitswert gemäß der Ähnlichkeitsmetrik, s, ermittelt werden (also $s(\hat{o}_i, \hat{o}_j)$). Anschaulich wird für die Vielzahl von Objekten 114 paarweise ermittelt, wie ähnlich sich die beiden Objekte eines Objektpaares sind. Gemäß verschiedenen Aspekten kann dieser jeweilige Ähnlichkeitswert anhand von Merkmalsvektoren ermittelt werden.

In einem Beispiel kann der jeweilige Ähnlichkeitswert, s*, mittels eines Fixpunkt-basierten Ansatzes 406 (also unter Verwendung einer Fixpunkt-Ähnlichkeitsmetrik) ermittelt werden. Hierbei kann eine Vielzahl von ersten Fixpunkten, $k_i \in K_i$, (auch als Schlüsselpunkte (engl.: keypoints) bezeichnet) des ersten Objekts, $\hat{o}_i$, und eine Vielzahl von zweiten Fixpunkten, $k_j \in K_j$, des zweiten Objekts, $\hat{o}_j$, ermittelt werden. Dazu kann eine Fixpunkt-Schätzungsmethode verwenden werden, wie beispielsweise eine klassische Computer-Vision-Methode wie zum Beispiel SIFT (Scale-Invariant Feature Transform), SuperPoint (Self-Supervised Interest Point Detection and Description), LDD (Learned Detector and Descriptor), DINOv2, oder ein anderes Fixpunkt-basiertes Verfahren.

Jeder erste Fixpunkt kann hierbei folglich einem jeweiligen Bildpunkt der dem ersten Objekt zugehörigen Bildpunkte zugeordnet sein und jeder zweite Fixpunkt kann einem jeweiligen Bildpunkt der dem zweiten Objekt zugehörigen Bildpunkte zugeordnet sein. Es kann dann für jeden ersten Fixpunkt ein jeweiliger erster Merkmalsvektor und für jeden zweiten Fixpunkt ein jeweiliger zweiter Merkmalsvektor ermittelt werden. Mittels eines Merkmals-Abgleichs (engl.: feature matching) können dann Fixpunktpaare ermittelt werden, von denen jedes Fixpunktpaar einen ersten Fixpunkt und einen zugehörigen zweiten Fixpunkt aufweist. Ein Fixpunktpaare kann beispielsweise dann ermittelt werden, wenn ein Fixpunktpaar-Ähnlichkeitswert, welcher eine Ähnlichkeit zwischen dem für den ersten Fixpunkt ermittelten ersten Merkmalsvektor und dem für den zweiten Fixpunkt ermittelten zweiten Merkmalsvektor gemäß einer anderen Ähnlichkeitsmetrik repräsentiert, größer als oder gleich einem Fixpunktpaar-Ähnlichkeitsschwellenwert ist. Diese andere Ähnlichkeitsmetrik kann beispielsweise invers zu einem Abstand, $d(f(k_i), f(k_j))$, zwischen dem ersten Merkmalsvektor, $f(k_i)$, und dem zweiten Merkmalsvektor, $f(k_j)$, sein.

Die Ähnlichkeit $s(\hat{o}_i, \hat{o}_j)$ kann dann beispielsweise ermittelte werden gemäß:

$$s\left(\hat{o}_i, \hat{o}_j\right) = \frac{1}{N} \sum_{k \in K_i} \mathbb{1}\left[\arg\min_{k' \in K_j} d\left(f(k), f(k')\right) < \theta\right] \qquad (1),$$

wobei $\mathbb{1}[P]$ eine Indikatorfunktion ist, die gleich eins sein kann, wenn P wahr ist und andernfalls null sein kann. Dies ermöglicht die Ähnlichkeiten binär als entweder ähnlich oder nicht ähnlich zu kategorisieren.

Da der Ähnlichkeitswert, s*, nicht zwangsläufig symmetrisch ist (z.B., wenn das erste Objekt, $\hat{o}_i$, eine Teilmenge des zweiten Objekts, $\hat{o}_j$, ist oder zeigt, haben die ersten Fixpunkte, $K_i$, Übereinstimmungen bei den zweiten Fixpunkten, $K_j$, aber nicht andersherum), also $s(\hat{o}_i, \hat{o}_j) \neq s(\hat{o}_j, \hat{o}_i)$, kann der Ähnlichkeitswert, s*, gemäß verschiedenen Aspekten der kleinere der beiden Ähnlichkeiten sein, also s* = min $(s(\hat{o}_i, \hat{o}_j), s(\hat{o}_j, \hat{o}_i))$.

In einem anderen Beispiel kann der jeweilige Ähnlichkeitswert, s*, mittels eines Merkmalsmittelungs-basierten Ansatzes 408 (also unter Verwendung einer Merkmalsmittelungs-Ähnlichkeitsmetrik) ermittelt werden. Es wurde erkannt, dass dies die Genauigkeit beim Erkennen von Objekten gleichen Objekttyps insbesondere dann signifikant erhöht, wenn in dem Bild 402 nicht die gleichen Bereiche sichtbar sind.

Optional kann vor dem Ermitteln des jeweiligen Merkmalsvektors der Bildbereich jedes Objekts auf eine vordefinierte (gleiche, einheitliche) Bildausschnitts-Größe $(S_p \times S_p)$ skaliert (und aufgefüllt) werden.

Dann kann für jeden Bildpunkt $m_i^{x,y}$ (mit x und y als Bildpunktpositionen), welcher dem (Bildbereich des) ersten Objekt(s), $\hat{o}_i$, zugehörig ist, ein jeweiliger erster Merkmalsvektor, $f_i^{x,y}$, ermittelt werden.

Für diese Vielzahl von ersten Merkmalsvektoren kann dann ein erster mittlerer Merkmalsvektor, $F_i^E$, als Mittelwert der ersten Merkmalsvektoren des ersten Objekts, $\hat{o}_i$, ermittelt werden., beispielsweise gemäß:

$$F_i^E = \frac{\sum_{x=1}^{S_p} \sum_{y=1}^{S_p} f_i^{x,y} \cdot m_i^{x,y}}{\sum_{x=1}^{S_p} \sum_{y=1}^{S_p} m_i^{x,y}}$$

Entsprechend kann für jeden Bildpunkt $(x, y)$, welcher dem (Bildbereich des) zweiten Objekt(s), $\hat{o}_j$, zugehörig ist, ein jeweiliger zweiter Merkmalsvektor, $f_j^{x,y}$, ermittelt werden und für die auf diese Weise ermittelte Vielzahl von zweiten Merkmalsvektoren kann ein entsprechender zweiter mittlerer Merkmalsvektor, $F_j^E$, ermittelt werden.

Ein mittlerer Merkmalsvektor 412 kann auch als Objekt-level Merkmalsvektor oder als Footprint bezeichnet werden. Ein Merkmalsvektor, wie hierin beschrieben, kann beispielsweise mittels eines Encoders 410 ermittelt werden.

Der jeweilige Ähnlichkeitswert, s*, kann dann derart ermittelt werden, dass dieser eine Ähnlichkeit zwischen dem ersten mittleren Merkmalsvektor, $F_i^E$, und dem zweiten mittleren Merkmalsvektors repräsentiert. Beispielsweise kann der Ähnlichkeitswert, s*, ermittelt werden gemäß:

$$s^* = s(\hat{o}_i, \hat{o}_j) = \exp\left(-\left\|F_i^E - F_j^E\right\|_2^2 / \tau\right)$$

wobei $\tau$ die Temperatur angibt und beispielsweise ungefähr 0,07 sein kann.

Zur Veranschaulichung können die ermittelten Ähnlichkeitswerte in einer N x N Ähnlichkeitsmatrix (auch als Affinitätsmatrix bezeichnet) dargestellt werden.

Anhand der ermittelten Vielzahl von Ähnlichkeitswerten kann die Vielzahl von Objekten 114 dann (in 308) in die mehreren Gruppen gruppiert werden. Gemäß verschiedenen Aspekten kann dies unter Verwendung einer Graph-basierten Clustermethode (z.B. auch als Graph-Zerlegungsmethode bezeichnet) erfolgen. einer Graph-basierten Clustermethoden ermöglichen das Gruppieren (z.B. Clustern) der Vielzahl von Objekten ohne, dass ein zuvor trainiertes Modell erforderlich ist (also Zero-Shot).

In einem Beispiel kann die Graph-basierten Clustermethode ein Minimale-Kosten-Mehrschnitt-Ansatz (engl.: Minimum-Cost-Multicut-Problem) sein. Hierbei kann jedes Objekt der Vielzahl von Objekten 114 einen jeweiligen Knoten, V, des Graphs $G = (V, E)$ bilden und jeder Knoten kann mit jedem anderen Knoten mittels einer jeweiligen Kante, E, verbunden sein. Anschaulich ist jede Kante einem Objektpaar $(\hat{o}_i, \hat{o}_j)$ zugeordnet und kann den jeweiligen Ähnlichkeitswert, s*, des Objektpaares $(\hat{o}_i, \hat{o}_j)$ aufweisen. Das ist das folgende Optimierungsproblem mit der Kostenfunktion $c : E \rightarrow \mathbb{R}$ zu lösen:

$$\min_{y \in \{0,1\}^E} \sum_{e \in E} c_e \cdot y_e$$

$$\text{s.t. } \forall C \in \text{cycles}(G) \; \forall e \in C : y_e \leq \sum_{e' \in C \setminus \{e\}} y_{e'},$$

**wobei eine** Kantenlabel $y_e = 1$ angibt, dass die Kante e durchtrennt ist. Dieser Minimale-Kosten-Mehrschnitt-Ansatz wird beispielsweise in M. Keuper et al.: "Efficient decomposition of image and mesh graphs by lifted multicuts", ICCV (International Conference on Computer Vision), 2015 beschrieben.

Der Minimale-Kosten-Mehrschnitt-Ansatz kann aber auch probabilistisch als maximale a-posteriori-Schätzungen aus einem Bayesschen Modell interpretiert werden, wie in B. Andres et al.: "Globally optimal closedsurface segmentation for connectomics,", ECCV (European Conference on Computer Vision), 2012 beschrieben.

Gemäß verschiedenen Aspekten kann ein wiederholter Objekt-Abgleich verwendet werden. Im Falle des Fixpunkt-Ansatzes kann ein fester Wert für $\beta$ verwendet werden und die Wahrscheinlichkeitsfunktion ist die Ähnlichkeitsfunktion gemäß Gleichung (1) ist. Im Falle des Merkmalvektormittelungs-Ansatzes kann die Wahrscheinlichkeitsfunktion aus den Daten durch Anpassung eines logistischen Regressionsmodells gelernt werden gemäß $p(y_e = 1 \mid s^*) = \frac{1}{1 + e^{-(\beta_0 + \beta_1 s^*)}}$, wobei die Zieldaten Positiv- und Negativbeispiele aus dem Trainingsdatensatz, d.h. Bildpaare von identischen ($y_e \doteq 0$) und unterschiedlichen ($y_e = 1$) Objekten sind. Das Ergebnis dieser Optimierung ist dann die maximale a-posteriori-Schätzung einer Gruppe von Objekten, die den gleichen Objekttyp aufweist.

Wird im Gegensatz zum Minimale-Kosten-Mehrschnitt-Ansatz nur ein Wahrscheinlichkeits-Schwellenwert genommen zum Durchtrennen von Kanten, so kann dies nicht sicherstellen, dass tatsächlich Cluster entstehen, sondern es könnte weiterhin einzelne Kanten zwischen Objekten unterschiedlicher Objekttypen geben, wodurch beispielsweise zwei unterschiedliche Objekttypen einer gleichen Gruppe zugeordnet werden könnten.

Wie in FIG.4 gezeigt, kann so eine Gruppe mit mehreren Objekten 414 des gleichen Objekttyps ermittelt werden.

Optional kann das Verfahren 300 ferner ein Klassifizieren der mindestens einen Gruppe, welche die mehreren Objekte gleichen Objekttyps aufweist, aufweisen. Dies kann beispielsweise als Mehrheitsentscheidung für alle Objekte der Gruppe erfolgen, wodurch die Genauigkeit (z.B. Konfidenz) der ermittelten Klasse für diese Objekte erhöht wird.

Ein Verfahren zum Steuern eines Roboters (z. B. der Robotervorrichtung 101) kann ein Erfassen eines Bildes (z.

B. unter Verwendung eines oder mehrerer hierin beschriebener Bildgebungssensoren), welches die Vielzahl von Objekten (in der Umgebung der Robotervorrichtung 101, beispielsweise in dem Behälter 116) zeigt, aufweisen. Das Verfahren zum Steuern des Roboters kann ein Detektieren der mehreren Objekte gleichen Objekttyps, wie hierin beschrieben, aufweisen. Zum Beispiel kann das Verfahren zum Steuern des Roboters das Gruppieren (z.B. Clustern) der Vielzahl von Objekten in die mehrere Gruppen aufweisen, um so Objekte gleichen Objekttyps zu ermitteln. Das Verfahren kann dann ein Steuern des Roboters zum Aufnehmen (z.B. Greifen) (zumindest) eines Objekts der mehreren Objekte gleichen Objekttyps aufweisen.

Beispielsweise können so Anomalien (z.B. defekte Objekte) aussortiert werden, da diese aufgrund ihrer Abweichung (z.B. eine kaputte Schraube) nicht der Gruppe des Objekttyps (also der expliziten Schraubenkonfiguration), welcher diese in nicht-defekten Zustand zugehörig wären, zugeordnet werden. Anschaulich ermöglicht das Verfahren 300 eine Anomalie-Detektion (z.B. zum Aussortieren defekter Produkte).

Beispielsweise kann der Roboter zum Sortieren von mehreren ersten Objekte eines ersten Objekttyps (z.B. in einen ersten Behälter) und von mehreren zweiten Objekte eines (von dem ersten Objekttyp verschiedenen) zweiten Objekttyps (z.B. in einen zweiten Behälter) gesteuert werden.

Beispielsweise kann das aufzunehmende Objekt im Falle von im Wesentlichen sortenreinen Objekten aus der Gruppe, welche die meisten Objekte gleichen Objekttyps aufweist, ausgewählt werden. Dadurch können diese Objekte von unerwünschten Objekten, wie Verpackungsmaterial, unterschiedenen werden (ohne dass eine Klassifikation erforderlich ist).

Beispielsweise kann das Roboter-Steuerungsmodells 112 beim Steuern des Roboters die Information, dass mehrere Objekte einen gleichen Objekttyp aufweisen, heranziehen beim Ermitteln einer Aufnehmkonfiguration des Roboters zum Aufnehmen des Objekts und/oder einer Trajektorie zum Bewegen des (aufgenommenen) Objekts. Auf diese Weise kann die Wahrscheinlichkeit eines erfolgreiches Manipulierens des Objekts erhöht werden.

Eine hierin beschriebene Wahrscheinlichkeit weist einen zugeordneten Wahrscheinlichkeitswert auf. Wird hierin eine Wahrscheinlichkeit mit einer anderen Wahrscheinlichkeit oder einem Schwellenwert verglichen (z.B. größer als, kleiner als, höher, niedriger, oberhalb von, etc.) so bezieht sich dies auf den der Wahrscheinlichkeit zugeordneten Wahrscheinlichkeitswert.

Obgleich in den obigen Ausführungen der Ansatz von FIG.3 zur Steuerung des Roboterarms 120 angewendet wird, kann dieser allgemein zum Ermitteln eines Steuersignals zur Steuerung eines beliebigen technischen Systems angewendet werden in einem Szenario, in dem das Erkennen von Objekten gleichen Objekttyps eine Rolle spielt.

**Patentansprüche**

1. Verfahren (300) zum Detektieren von Objekten gleichen Objekttyps in einem Bild (402), das Verfahren (300) aufweisend:

   Detektieren (302) einer Vielzahl von Objekten (114) in dem Bild (402);
   Ermitteln (304) einer Vielzahl von Objektpaaren, welche für jedes Objekt der Vielzahl von Objekten (114) ein jeweiliges Objektpaar mit jedem anderen Objekt der Vielzahl von Objekten (114) aufweist;
   Ermitteln (306) einer Vielzahl von Ähnlichkeitswerten, indem für jedes Objektpaar der Vielzahl von Objektpaaren ein jeweiliger Ähnlichkeitswert, welcher eine Ähnlichkeit zwischen einem ersten Objekt des Objektpaares und einem zweiten Objekt des Objektpaares gemäß einer Ähnlichkeitsmetrik repräsentiert, ermittelt wird, wobei das Ermitteln des jeweiligen Ähnlichkeitswertes aufweist:

      Ermitteln einer Vielzahl von ersten Merkmalsvektoren, indem für mehrere dem ersten Objekt zugehörige Bildpunkte des Bildes ein jeweiliger erster Merkmalsvektor ermittelt wird,
      Ermitteln einer Vielzahl von zweiten Merkmalsvektoren, indem für mehrere dem zweiten Objekt zugehörige Bildpunkte des Bildes ein jeweiliger zweiter Merkmalsvektor ermittelt wird, und
      Ermitteln des jeweiligen Ähnlichkeitswertes unter Verwendung der Vielzahl von ersten Merkmalsvektoren und der Vielzahl von zweiten Merkmalsvektoren;

   und
   unter Verwendung der Vielzahl von Ähnlichkeitswerten, Gruppieren (308) der Vielzahl von Objekten (114) in mehrere Gruppen, von denen mindestens eine Gruppe mehrere Objekte (414) gleichen Objekttyps aufweist.

2. Verfahren (300) gemäß Anspruch 1,
   wobei das Detektieren (302) der Vielzahl von Objekten (114) in dem Bild (402) aufweist:
   Eingeben des Bildes und einer Textbeschreibung in ein maschinelles Lernmodell (404), welches eingerichtet ist, in Reaktion auf die Eingabe des Bildes und der Textbeschreibung alle in dem Bild (402) gemäß der Textbeschreibung erkannten Objekte als die Vielzahl von Objektes (114) auszugeben, wobei ein voneinander verschiedene Objekttypen umfassender Oberbegriff als Textbeschreibung eingebeben wird.

3. Verfahren (300) gemäß Anspruch 1 oder 2,

wobei das Ermitteln der Vielzahl von ersten Merkmalsvektoren aufweist: Ermitteln einer Vielzahl von ersten Fixpunkten des ersten Objekts, von denen jeder erste Fixpunkt einem jeweiligen Bildpunkt der mehreren dem ersten Objekt zugehörigen Bildpunkte zugeordnet ist, so dass für jeden ersten Fixpunkt der jeweilige erste Merkmalsvektor ermittelt wird;
wobei das Ermitteln der Vielzahl von zweiten Merkmalsvektoren aufweist: Ermitteln einer Vielzahl von zweiten Fixpunkten des zweiten Objekts, von denen jeder zweite Fixpunkt einem jeweiligen Bildpunkt der mehreren dem zweiten Objekt zugehörigen Bildpunkte zugeordnet ist, so dass für jeden zweiten Fixpunkt der jeweilige zweite Merkmalsvektor ermittelt wird;
wobei das Ermitteln des jeweiligen Ähnlichkeitswertes unter Verwendung der Vielzahl von ersten Merkmalsvektoren und der Vielzahl von zweiten Merkmalsvektoren aufweist:

Ermitteln ein oder mehrerer Fixpunktpaare, indem ein jeweiliges Fixpunktpaar mit einem ersten Fixpunkt der Vielzahl von ersten Fixpunkten und einem zugehörigen zweiten Fixpunkt der Vielzahl von zweiten Fixpunkten ermittelt wird, wenn ein Fixpunktpaar-Ähnlichkeitswert, welcher eine Ähnlichkeit zwischen dem für den ersten Fixpunkt ermittelten jeweiligen ersten Merkmalsvektor und dem für den zweiten Fixpunkt ermittelten jeweiligen zweiten Merkmalsvektor repräsentiert, größer als oder gleich einem Fixpunktpaar-Ähnlichkeitsschwellenwert ist; und
Ermitteln des jeweiligen Ähnlichkeitswertes für das Objektpaar unter Verwendung einer Anzahl der ein oder mehreren Fixpunktpaare.

4. Verfahren (300) gemäß Anspruch 1 oder 2,
wobei das Ermitteln des jeweiligen Ähnlichkeitswertes der Vielzahl von Ähnlichkeitswerten für ein Objektpaar der Vielzahl von Objektpaaren, welches ein erstes Objekt und ein zweites Objekt aufweist, aufweist:

Ermitteln einer Vielzahl von ersten Merkmalsvektoren, indem jeweils für ein oder mehrere dem ersten Objekt zugehörige Bildpunkte des Bildes ein jeweiliger erster Merkmalsvektor ermittelt wird;
Ermitteln eines ersten mittleren Merkmalsvektors als Mittelwert der Vielzahl von ersten Merkmalsvektoren;
Ermitteln einer Vielzahl von zweiten Merkmalsvektoren, indem für jeden dem zweiten Objekt zugehörigen Bildpunkt des Bildes ein jeweiliger zweiter Merkmalsvektor ermittelt wird;
Ermitteln eines zweiten mittleren Merkmalsvektors als Mittelwert der Vielzahl von zweiten Merkmalsvektoren; und
Ermitteln des jeweiligen Ähnlichkeitswertes für das Objektpaar derart, dass dieser eine Ähnlichkeit zwischen dem ersten mittleren Merkmalsvektor und dem zweiten mittleren Merkmalsvektor repräsentiert.

5. Verfahren (300) gemäß einem der Ansprüche 1 bis 4,
wobei das Gruppieren (308) der Vielzahl von Objekten (114) aufweist:
Clustern der Vielzahl von Objekten (114) in die mehreren Gruppen unter Verwendung einer Graph-basierten Clustermethode.

6. Verfahren (300) zum Steuern einer Robotervorrichtung (101), das Verfahren (300) aufweisend:

Erfassen eines Bildes (402), welches eine Vielzahl von Objekten (114) in einer Umgebung der Robotervorrichtung (101) zeigt, von denen mehrere Objekte (414) einen gleichen Objekttyp aufweisen;
Detektieren der mehreren Objekte (414) gleichen Objekttyps mittels eines Verfahrens (300) gemäß einem der Ansprüche 1 bis 5; und
Steuern der Robotervorrichtung (101) zum Aufnehmen eines Objekts der mehreren Objekte (414).

7. Steuervorrichtung (106), die eingerichtet ist, das Verfahren (300) gemäß Anspruch 6 auszuführen.

8. Robotervorrichtung (101), welche die Steuervorrichtung (106) gemäß Anspruch 7 aufweist.

9. Computerprogramm mit Befehlen, die, wenn sie durch einen Prozessor ausgeführt werden, bewirken, dass der Prozessor das Verfahren gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren gemäß einem der Ansprüche 1 bis 6 durchführt.

Fig. 1

EP 4 787 333 A1

116 —

| 1 | 2 | | 2 | | 1 |
|---|---|---|---|---|---|

1

1

1

5      1

2

3      1      2      2

1

1      2

1      2      1

2      1

2      2

2

6

**Fig. 2**

300

```
┌──────────────┐
│     302      │
└──────────────┘
        │
        ▼
┌──────────────┐
│     304      │
└──────────────┘
        │
        ▼
┌──────────────┐
│     306      │
└──────────────┘
        │
        ▼
┌──────────────┐
│     308      │
└──────────────┘
```

**Fig. 3**

Fig. 4

EP 4 787 333 A1

Europäisches
Patentamt

European
Patent Office

Office européen
des brevets

# EUROPÄISCHER RECHERCHENBERICHT

Nummer der Anmeldung

EP 25 15 5252

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/019030 A1 (CANSIZOGLU ESRA [US] ET AL) 17. Januar 2019 (2019-01-17) | 1,3-10 | INV. G06V10/46 |
| Y | * Absatz [0007] - Absatz [0018] * | 2 | G06V10/75 |
| | * Absatz [0027] - Absatz [0028] * | | G06V10/74 |
| | * Absatz [0069] - Absatz [0074] * | | G06V10/762 |
| | * Absatz [0085] * | | |
| | * Absatz [0091] - Absatz [0094] * | | |
| | * Abbildungen 7-8 * | | |
| | ----- | | |
| Y | RADFORD ALEC ET AL: "Learning Transferable Visual Models From Natural Language Supervision", PROCEEDINGS OF THE 38TH INTERNATIONAL CONFERENCE ON MACHINE LEARNING, ICML 2021, [Online] Bd. 139, 24. Juli 2021 (2021-07-24), Seiten 8748-8763, XP093268917, Gefunden im Internet: URL:http://proceedings.mlr.press/v139/radford21a.html> [gefunden am 2025-04-09] * Abbildung 1 * * Unterschrift zu Abbildung 1 * ----- | 2 | |

RECHERCHIERTE SACHGEBIETE (IPC)

G06V

Der vorliegende Recherchenbericht wurde für alle Patentansprüche erstellt

| Recherchenort | Abschlußdatum der Recherche | Prüfer |
|---|---|---|
| Den Haag | 1. Mai 2025 | De Coi, Juri |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 5252

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-05-2025

| Im Recherchenbericht angeführtes Patentdokument | Datum der Veröffentlichung | Mitglied(er) der Patentfamilie | Datum der Veröffentlichung |
|---|---|---|---|
| US 2019019030 A1 | 17-01-2019 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. KEUPER et al.** Efficient decomposition of image and mesh graphs by lifted multicuts. *ICCV (International Conference on Computer Vision)*, 2015

- **B. ANDRES et al.** Globally optimal closedsurface segmentation for connectomics. *ECCV (European Conference on Computer Vision)*, 2012